# EUROPEAN PATENT APPLICATION

(11) **EP 3 300 405 A1**
(43) Date of publication of application: **28.03.2018**
(21) Application number: 16795627.5
(22) Date of filing: 11.01.2016
(51) Int. Cl.: H04W 12/06, H04W 48/08, H04L 29/06, H04W 12/08, H04W 12/12, H04W 84/12

(54) **EQUIPMENT IDENTIFIER CHECKING METHOD, SYSTEM, EQUIPMENT AND STORAGE MEDIUM**

(30) Priority: 19.05.2015 CN 201510254743
(71) Applicant: ZTE Corporation, Shenzhen, Guangdong 518057 (CN)
(72) Inventor: ZHOU, Xingyue, Shenzhen Guangdong 518057 (CN); LIANG, Shuang, Shenzhen Guangdong 518057 (CN)
(74) Representative: Lavoix
(86) International application number: PCT/CN2016/070616
(87) International publication number: WO 2016/184140

(57) **Abstract**

Disclosed in embodiments of the disclosure are a method, system, equipment for checking an equipment identifier and a storage medium. According to the method, when a Wireless Local Area Networks (WLAN) access network is a Trusted WLAN Access Network (TWAN), the TWAN transmits identifier information of a user equipment (UE) to an Equipment Identifier Register (EIR). The identifier information of the UE is configured to enable the EIR to check the identifier information of the UE. The TWAN receives a check result transmitted by the EIR and performs an Evolved Packet Core (EPC) access procedure on the UE according to the check result.

## Description

### TECHNICAL FIELD

The disclosure relates to checking an International Mobile Equipment Identity (IMEI) in communications, and in particular to a method, system, equipment for checking an equipment identifier and a storage medium.

### BACKGROUND

The IMEI is a unique identity number of user equipment such as a mobile phone. An Equipment Identity Register (EIR) is a logical entity in a mobile network system, and is configured to store IMEI state information of the equipment in a mobile network. The EIR may identify an equipment identifier in a white list, a grey list and a black list. Generally speaking, each EIR at least includes the white list of the equipment. Some equipment also may be unknown equipment for the EIR and the unknown equipment may belong to the grey list. The black list is also very important. For example, a mobile operator may deploy the EIR in the network to implement monitoring on a state of User Equipment (UE), such as tracking stolen equipment by setting the black list.

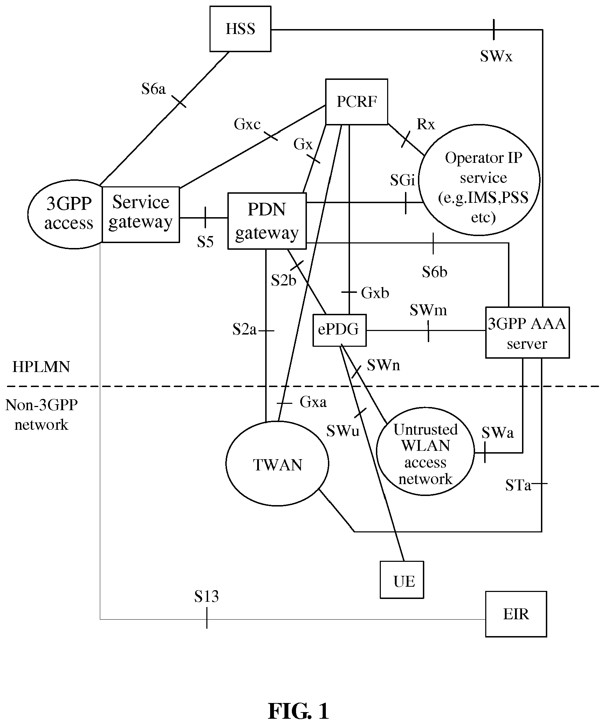

In the related art, an interface is provided between the EIR and a network element in a 3rd Generation Partnership Project (3GPP). For example, there is provided the interface between the EIR and a Mobility Management Entity (MME), between the EIR and a Serving General Packet Radio Service (GPRS) Support Node (SGSN) and also between the EIR and a Mobile-services Switching Centre (MSC). Herein, the interface between the EIR and the MME is an S 13 interface (referring to FIG. 1), the interface between the EIR and the SGSN is a Gf interface, and the interface between the EIR and the MSC is an F interface. The MME, the SGSN and the MSC transmit IMEI information to the EIR through these interfaces with the EIR, respectively, and then the EIR checks the IMEI information of the equipment.

The above related art are all based on the network element related to access control of a 3GPP access network. The IMEI information of the equipment accessing to the 3GPP is transmitted to the EIR for checking. The EIR compares the received IMEI information with the white list, the black list and the grey list, and transmits a comparison result to the MME or the SGSN or the MSC. Thus, the network element for the access control determines whether to allow the mobile equipment to enter the network. Hence, if the used equipment is a stolen mobile phone or a mobile UE has a fault and an unapproved model, the network element for the access control will determine a position of the stolen equipment accordingly and block and track it. Likewise, for mobile equipment with a fault, precautionary measures also can be taken in time.

Along with the gradual maturity of a Wireless Local Area Network (WLAN) access technology and the demand of a user on a high speed wireless access network, operators in home and abroad all are sparing no effort to develop a WLAN service. An Evolved Packet System (EPS) supports to implement intercommunication with a non-3GPP network such as the WLAN through an S2a/S2b/S2c interface. The non-3GPP network includes a trusted non-3GPP network and an untrusted non-3GPP network. In this sense, the WLAN access network to a 3GPP WLAN Evolved Packet Core Network (EPC) also is divided into a Trusted WLAN Access Network (TWAN) and an untrusted WLAN access network. The TWLAN may be directly connected with a Packet Data Network Gateway (PDN GW) via the S2a interface. The untrusted WLAN access network is connected with the PDN GW via an Evolved Packet Data Gateway (ePDG), and the interface between the ePDG and the PDN GW is the S2b interface. Herein, in a trusted WLAN access scenario, a connection established by the UE to operate the PDN includes three modes.
(1) A transparent single connection mode, that is, a WLAN access EPC supported by a Release 11 (Rel-11) and having no influence on the UE. In the mode, the UE only can establish a single packet data connection via the WLAN network and is not supported to switch the packet data connection between the WLAN access network and the 3GPP access network. The data connection here may be the packet data connection to the EPC and also may be a Non-seamless WLAN offload (NSWO) connection directly from the WLAN network to a data network.
(2) A single connection mode. In this mode, the UE is supported to establish the connection in the TWAN and only supported to establish a single PDN connection. The UE is also supported to switch the packet data network connection between the WLAN and the 3GPP.
(3) A multi-connection mode. In this mode, the UE is supported to establish multiple PDN connections in the TWAN and supported to switch the packet data network connection between the WLAN and the 3GPP.

The WLAN access is an important supplementary access approach for a 3GPP packet data service. In some special environments, by deploying the WLAN, the UE may access to the EPC from the WLAN to use a related service, such as an Information Management System (IMS) service and an emergency call service of the operator. However, at present, the WLAN access still cannot support the checking on the IMEI of the user such that the monitoring of the operator on illegal equipment cannot be implemented in the WLAN scenario.

### SUMMARY

In view of the above and in order to solve at least one problem in the related art, the embodiments of the disclosure provide a method, system, equipment for checking an equipment identifier and a storage medium, thereby being capable of implementing checking on identifier information of an UE in a WLAN access scenario.

The technical solutions of the embodiments of the disclosure are implemented as follows.

According to a first aspect, the embodiments of the disclosure provide a method for checking an equipment identifier. When a WLAN access network is a TWAN, the TWAN transmits identifier information of an UE to an EIR. The identifier information of the UE is configured to enable the EIR to check the identifier information of the UE. The TWAN receives a check result transmitted by the EIR. The TWAN performs an EPC access procedure on the UE according to the check result.

According to a second aspect, the embodiments of the disclosure provide a method for checking an equipment identifier. When a WLAN access network is an untrusted WLAN access network, an ePDG transmits identifier information of an UE to an EIR. The identifier information of the UE is configured to enable the EIR to check the identifier information of the UE. The ePDG receives a check result transmitted by the EIR. The ePDG performs an EPC access procedure on the UE according to the check result.

According to a third aspect, the embodiments of the disclosure provide a method for checking an equipment identifier. When an UE is connected to an EPC from a TWAN or an untrusted WLAN access network, a 3GPP Authentication, Authorization and Accounting (AAA) server transmits identifier information of the UE to an EIR. The identifier information of the UE is configured to enable the EIR to check the identifier information of the UE. The 3GPP AAA server receives a check result transmitted by the EIR. The 3GPP AAA server performs an EPC access procedure on the UE according to the check result.

According to a fourth aspect, the embodiments of the disclosure provide a TWAN, including a first transmission unit, a first receiving unit and a first processing unit. The first transmission unit is configured to transmit, when a WLAN access network is a TWAN, the identifier information of an UE to an EIR. The identifier information of the UE is configured to enable the EIR to check the identifier information of the UE. The first receiving unit is configured to receive a check result transmitted by the EIR. The first processing unit is configured to perform an EPC access procedure on the UE according to the check result.

According to a fifth aspect, the embodiments of the disclosure provide an ePDG, including a second transmission unit, a second receiving unit and a second processing unit. When a WLAN access network is an untrusted WLAN access network, the second transmission unit is configured to transmit identifier information of an UE to an EIR. The identifier information of the UE is configured to enable the EIR to check the identifier information of the UE. The second receiving unit is configured to receive a check result transmitted by the EIR. The second processing unit is configured to perform an EPC access procedure on the UE according to the check result.

According to a sixth aspect, the embodiments of the disclosure provide a 3GPP AAA server, including a third transmission unit, a third receiving unit and a third processing unit. The third transmission unit is configured to transmit, when an UE is connected to an EPC from a TWAN or an untrusted WLAN access network, the identifier information of the UE to an EIR. The identifier information of the UE is configured to enable the EIR to check the identifier information of the UE. The third receiving unit is configured to receive a check result transmitted by the EIR. The third processing unit is configured to perform an EPC access procedure on the UE according to the check result.

According to a seventh aspect, the embodiments of the disclosure provide a system for checking an equipment identifier including a TWAN and an EIR. The TWAN is configured to transmit, when a WLAN access network is the TWAN, the identifier information of an UE to the EIR, wherein the identifier information of the UE is configured to enable the EIR to check the identifier information of the UE; to receive a check result transmitted by the EIR; and to perform an EPC access procedure on the UE according to the check result. The EIR is configured to check legality on the identifier information of the UE and transmit a check result to a 3GPP AAA server.

According to an eighth aspect, the embodiments of the disclosure provide a system for checking an equipment identifier including an ePDG and an EIR. The ePDG is configured to transmit, when a WLAN access network is an untrusted WLAN access network, the identifier information of an UE to the EIR, wherein the identifier information of the UE is configured to enable the EIR to check the identifier information of the UE; to receive a check result transmitted by the EIR; and to perform an EPC access procedure on the UE according to the check result. The EIR is configured to check legality on the identifier information of the UE and transmit a check result to a 3GPP AAA server.

According to a ninth aspect, the embodiments of the disclosure provide a system for checking an equipment identifier including a 3GPP AAA server and an EIR. The 3GPP AAA server is configured to transmit, when an UE is connected to an EPC from a TWAN or an untrusted WLAN access network, the identifier information of the UE to the EIR, wherein the identifier information of the UE is configured to enable the EIR to check the identifier information of the UE; to receive a check result transmitted by the EIR; and to perform an EPC access procedure on the UE according to the check result. The EIR is configured to check legality on the identifier information of the UE and transmit a check result to the 3GPP AAA server.

According to a tenth aspect, the embodiments of the disclosure provide a computer storage medium having computer executable instructions stored therein. The computer executable instructions are configured to implement the method for checking the equipment identifier provided by the embodiments according to the first aspect.

According to an eleventh aspect, the embodiments of the disclosure provide a computer storage medium having computer executable instructions stored therein. The computer executable instructions are configured to implement the method for checking the equipment identifier provided by the embodiments according to the second aspect.

According to a twelfth aspect, the embodiments of the disclosure provide a computer storage medium having computer executable instructions stored therein. The computer executable instructions are configured to implement the method for checking the equipment identifier provided by the embodiments according to the third aspect.

According to the methods, systems, equipment for checking the equipment identifier and the storage media provided by the embodiments of the disclosure, when the WLAN access network is the TWAN, the TWAN transmits the identifier information of the UE to the EIR. The identifier information of the UE is configured to enable the EIR to check the identifier information of the UE. The TWAN receives the check result transmitted by the EIR and performs the EPC access procedure on the UE according to the check result. In such a way, the checking on the identifier information of the UE is implemented in the WLAN access scenario.

### BRIEF DESCRIPTION OF DRAWINGS

FIG. 1 is a systematic diagram of a network architecture of the related art.
FIG. 2 is a systematic diagram I of a network architecture in an embodiment of the disclosure.
FIG. 3 is a systematic diagram II of a network architecture in an embodiment of the disclosure.
FIG. 4-1 is a flow chart illustrating an implementation process in a first embodiment of the disclosure.
FIG. 4-2 is a flow chart I illustrating an implementation process in a second embodiment of the disclosure.
FIG. 4-3 is a flow chart II illustrating an implementation process in a second embodiment of the disclosure.
FIG. 5 is a flow chart illustrating an implementation process in a third embodiment of the disclosure.
FIG. 6 is a flow chart illustrating an implementation process in a fourth embodiment of the disclosure.
FIG. 7 is a flow chart illustrating an implementation process in a fifth embodiment of the disclosure.
FIG. 8 is a structural schematic diagram of a TWAN in a sixth embodiment of the disclosure.
FIG. 9 is a structural schematic diagram of an ePDG in a seventh embodiment of the disclosure.
FIG. 10 is a structural schematic diagram of a 3GPP AAA server in an eighth embodiment of the disclosure.

### DETAILED DESCRIPTION

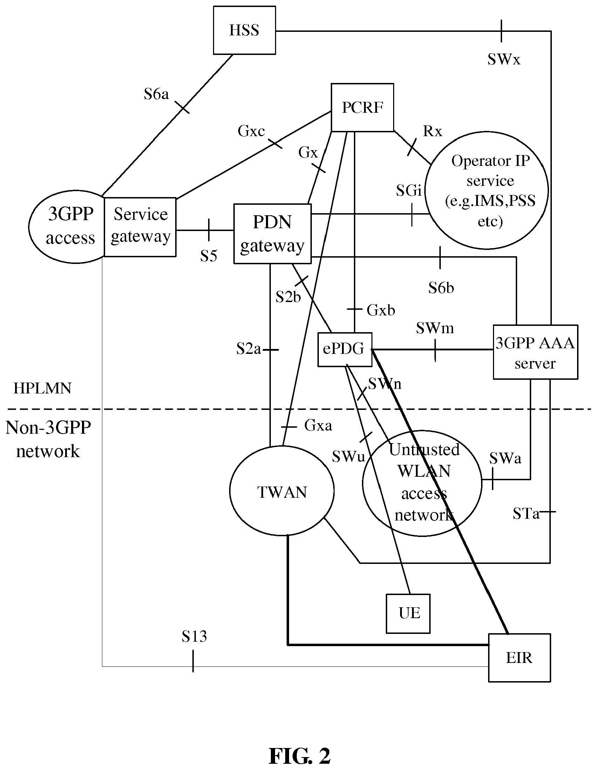

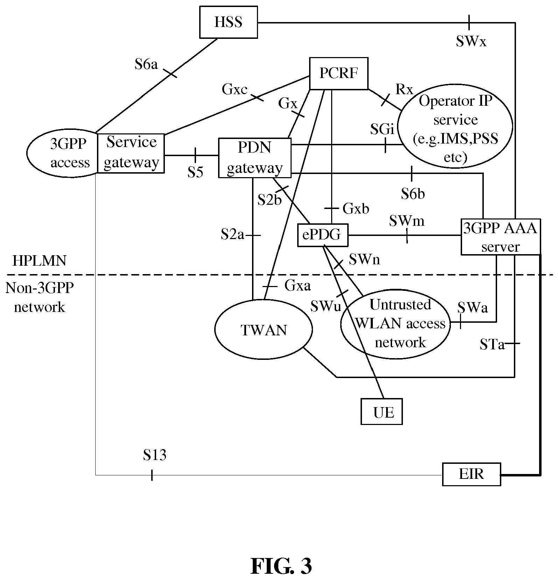

To solve the problems in the related art, two improved methods are proposed firstly by the embodiments of the disclosure based on the existing network architectures. Herein, each of the improved methods corresponds to one of the network architectures. FIG. 1 is a systematic diagram of a network architecture of the related art, and the network element (i.e. MME) for the access control of the 3GPP is interacted with the EIR via an S13 interface to implement the checking on the equipment identifier. FIG. 2 is a first systematic diagram of a network architecture in an embodiment of the disclosure. As shown in FIG. 2, the EIR is connected with the TWAN, and the EIR is connected with the ePDG. The connection between the EIR and the TWAN as well as between the EIR and the ePDG may be implemented by using various interfaces. As a preferred embodiment, the interface between the EIR and the ePDG may be an interface that meets a Diameter protocol, and this is the case for the interface between the EIR and the TWAN. In this way, when the UE is accessed from the TWAN, the TWAN transmits an IMEI checking request to the EIR, and the EIR replies a check result to the TWAN. When the UE is accessed from the untrusted WLAN access network, the ePDG transmits the IMEI checking request to the EIR and the EIR replies the check result to the ePDG. FIG. 3 is a second systematic diagram of a network architecture in an embodiment of the disclosure. As shown in FIG. 3, the EIR is connected with a 3GPP AAA server, and the connection among the EIR, the EIR and the 3GPP AAA server may be implemented using various interfaces. As a preferred embodiment, the interface between the EIR and the 3GPP AAA server may be an interface that meets the Diameter protocol. In this way, when the UE is connected to the EPC from the TWAN or the untrusted WLAN access network, the 3GPP AAA server transmits the IMEI checking request to the EIR and the EIR replies the check result to the 3GPP AAA server.

The differences between FIG. 2 and FIG. 3 are as follows. If the checking on the identifier information of the UE is implemented in the WLAN access scenario, the solutions shown in FIG. 2 are required to improve both the TWAN and the ePDG, whereas the solutions shown in FIG. 3 are required to only improve the 3GPP AAA. Hence, the solutions shown in FIG. 3 are implemented more easily. Based on the two network architectures shown in FIG. 2 and FIG. 3, when the UE is connected to the EPC from the WLAN access network, two solutions are provided by the embodiments of the disclosure.

The first solution corresponds to the network architecture shown in FIG. 3. When an UE is connected to an EPC from a TWAN or an untrusted WLAN access network, a 3GPP AAA server may transmit identifier information of the UE to an EIR. Then, the EIR checks the identifier information of the UE and replies a check result to the 3GPP AAA server.

The second solution corresponds to the network architecture shown in FIG. 2. When a WLAN access network is a TWAN, the TWAN may transmit identifier information of an UE to an EIR. Then, the EIR checks the identifier information of the UE and replies a check result to the TWAN.

When a WLAN access network is an untrusted WLAN access network, an ePDG transmits identifier information of an UE to an EIR. Then, the EIR checks the identifier information of the UE and replies a check result to the ePDG.

The technical solutions of the disclosure will be described below in detail with reference to accompanying drawings and specific embodiments.

### Embodiment One

The embodiment of the disclosure provides a method for checking an equipment identifier. The method is applied to a TWAN. A function implemented by the method may be implemented by invoking a program code using a processor in the TWAN. Of course, the program code may be stored in a computer storage medium. Thus, it can be seen that the TWAN at least includes the processor and the storage medium.

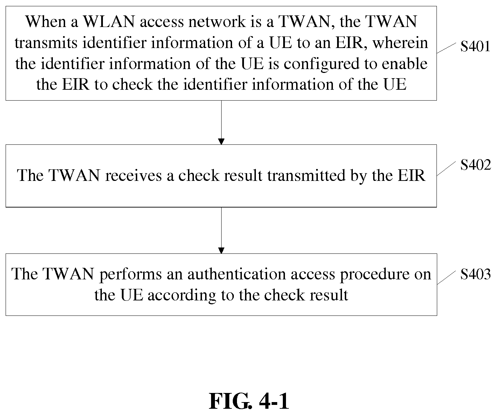

FIG. 4-1 is a flow chart illustrating an implementation process in a first embodiment of the disclosure. As shown in FIG. 4-1, the method includes the following steps.

In step S401, when a WLAN access network is a TWAN, the TWAN transmits identifier information of an UE to an EIR. The identifier information of the UE is configured to enable the EIR to check the identifier information of the UE.

In step S402, the TWAN receives a check result transmitted by the EIR.

In step S403, the TWAN performs an EPC access procedure on the UE according to the check result.

In the embodiment of the disclosure, before the TWAN transmits the identifier information of the UE to the EIR, the method further includes the following steps.

When the UE establishes a connection based on an Institute of Electrical and Electronic Engineers (IEEE) 802.11 with the TWAN, the TWAN transmits an Extensible Authentication Protocol (EAP)-REQ message to the UE. The EAP-REQ message is configured to request the identifier information of the UE from the UE. The TWAN receives an EAP-RSP message transmitted by the UE. The EAP-RSP message carries the identifier information of the UE.

In the embodiment of the disclosure, the operation that the TWAN transmits the identifier information of the UE to the EIR includes the TWAN transmits an Mobile Equipment (ME) identifier checking request message to the EIR. The ME equipment identifier checking request message carries the identifier information of the UE and is configured to request the EIR to check whether the identifier information of the UE is legal.

The operation that the TWAN receives the check result transmitted by the EIR includes the TWAN receives an ME equipment identifier checking response message transmitted by the EIR. The ME equipment identifier checking response message carries the check result. The check result includes a result that the identifier information of the UE is legal or a result that the identifier information of the UE is illegal.

In the embodiment of the disclosure, the operation that the TWAN performs the EPC access procedure on the UE according to the check result includes, when the check result indicates that the identifier information of the UE is legal, the TWAN performs a process of accessing to the EPC to establish a connection on the UE. When the check result indicates that the identifier information of the UE is illegal, the TWAN transmits an EAP-failure message to the UE. The EAP-failure message is configured to indicate that the UE is refused to be accessed to the EPC, the identifier information of the UE is illegal and the process is ended. Herein, there are many reasons to refuse the UE to be accessed to the EPC. For example, the identifier information of the UE is illegal (the illegality may refer to that the identifier information of the UE is in the black list or other reasons).

In the embodiment of the disclosure, the identifier information of the UE includes the IMEI of the UE. Alternatively, the identifier information of the UE includes the IMEI and an International Mobile Subscriber Identity (IMSI) of the UE.

### Embodiment Two

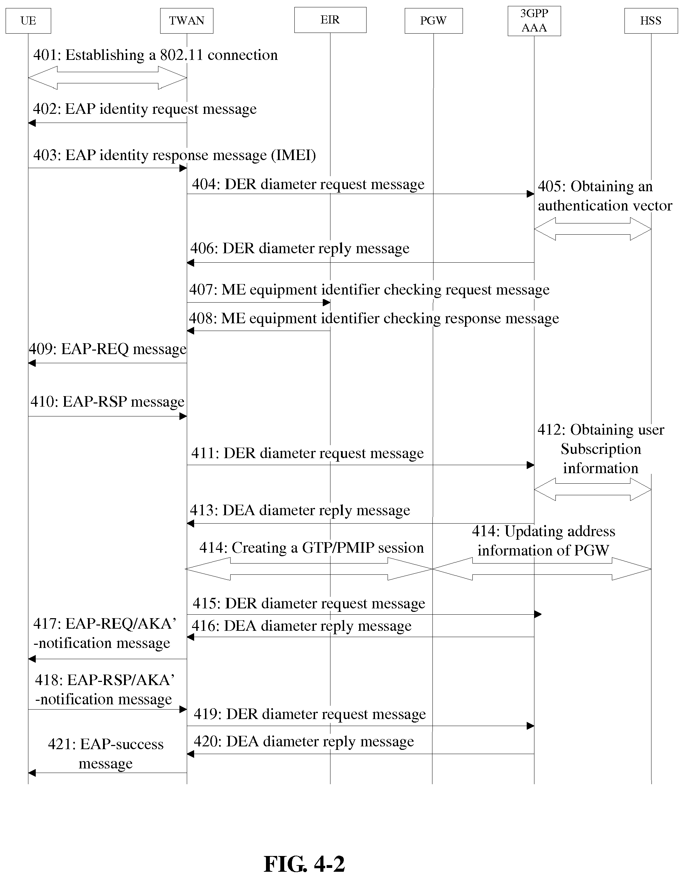

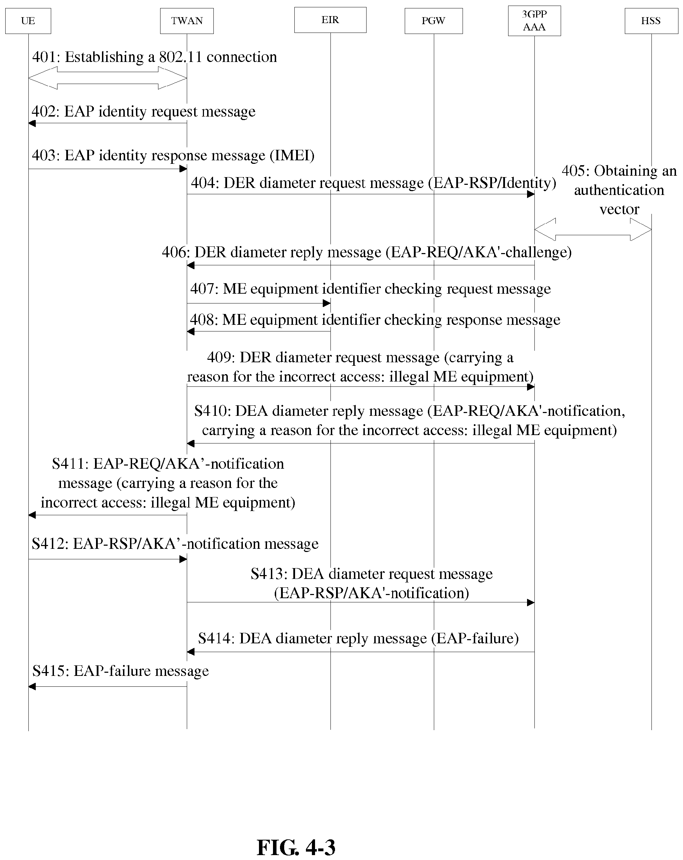

A UE is connected to an EPC from a TWAN. What is described by the embodiment herein is that the TWAN transmits identifier information of the UE to an EIR, and the EIR checks the identifier information of the UE and feeds a check result back to the TWAN, thereby implementing the checking on an equipment identifier. Herein, the embodiment includes two flowcharts in total, namely FIG. 4-2 and FIG. 4-3. The previous nine steps (step 401 to step 409) in FIG. 4-2 are the same as those in FIG. 4-3. The differences therebetween are as follows. After step 409, what is described by FIG. 4-2 is that the TWAN returns an Extended Address Register (EAR)-success message to the UE, whereas what is described by FIG. 4-3 is that the TWAN returns an EAR-failure message to the UE. FIG. 4-2 is a flow chart I illustrating an implementation process in a second embodiment of the disclosure. As shown in FIG. 4-2, the process includes the following steps.

In step 401, the UE establishes a connection based on an IEEE 802.11 with the TWAN.

In step 402, the TWAN transmits an EAP-REQ message/Identity to the UE.

Here, the EAP in the embodiment and in the following embodiments is an abbreviation of an extensible authentication protocol. In each embodiment of the disclosure, various messages in the EAP may be widely used, such as the EAP-REQ message and an EAP-RSP message. With regard to the above messages in the EAP, the specific description may be referred to EAP associated standards and will not be repeated here. The EAP-REQ message is configured to implement identity authentication and interactive processing for access configuration information. In step 402, the EAP-REQ message/Identity refers to that the EAP-REQ message is configured to request the identity or the identifier information, wherein the symbol "/" therein represents a content carried by the EAP-REQ message.

In step 403, the UE transmits the EAP-RSP message/Identity to the TWAN.

Here, the EAP-RSP message carries the IMEI, or carries the IMEI and the IMSI. The EAP-RSP message corresponds to the EAP-REQ message. In step 402 and step 403, the TWAN is interacted with the UE in terms of an EAP Identity, thereby performing the identity authentication and the interactive processing for the access configuration information. The UE transmits the IMEI and/or the IMSI to the TWAN by means of the EAP RSP message.

In step 404, the TWAN transmits a Distinguished Encoding Rules (DER) Diameter request message/EAP-RSP message/Identity to a 3GPP AAA.

Here, the 3GPP AAA in the embodiment and in the following embodiments refers to a 3GPP AAA server.

Here, the DER Diameter request message/EAP-RSP message/Identity refers to that the DER Diameter request message carries the EAP-RSP message and the EAP-RSP message carries the Identity.

In step 405, the 3GPP AAA obtains an authentication-authorization vector from a Home Subscriber Server (HSS).

In step 406, the 3GPP AAA transmits a Data Exchange Agreement (DEA) Diameter reply message to the TWAN.

Here, the DEA Diameter reply message carries the authentication-authorization vector and also carries the EAP-REQ message and an AKA'-challenge message. The AKA'-challenge message carries a selected mode=TSCM+SCM+MCM.

Here, in step 404 to step 406, the TWAN transmits a Diameter authentication-authorization request message to the 3GPP AAA. After obtaining the authentication-authorization vector from the HSS, the 3GPP AAA transmits the authentication-authorization vector to the UE by means of the DEA Diameter reply message/EAP-REQ message/AKA'-challenge message. The authentication-authorization vector is configured to indicate that the network supports single-connection and multi-connection modes.

In step 407, the TWAN transmits an ME equipment identifier checking request message to the EIR.

Here, the ME in the ME equipment identifier checking request message represents mobile equipment.

In step 408, the EIR transmits an ME equipment identifier checking response message to the TWAN.

Here, in step 407 and step 408, the ME equipment identifier checking request message carries the IMEI, or the IMEI and IMSI information. In this way, the TWAN transmits the IMEI, or the IMEI and IMSI information received from the UE to the EIR. Then, the EIR performs equipment identifier information checking. Specifically, the EIR checks whether the IMEI, or the IMEI and IMSI information is legal or valid, and transmits a check result to the TWAN by means of the ME equipment identifier checking response message. The TWAN stores the result and continues to perform the subsequent procedures. The check result includes whether the IMEI, or the IMEI and IMSI information is legal and valid, or illegal and invalid. In the embodiment, it is assumed that the check result is that the equipment identifier of the UE is valid. Thus, the TWAN performs the process of the UE accessing to the EPC to establish a connection (in step 409 and subsequent steps).

In step 409, the TWAN transmits the EAP-REQ message/AKA'-challenge message to the UE.

Here, the EAP-REQ message carries the authentication-authorization vector and the AKA'-challenge message. In step 409, after obtaining the authentication-authorization vector from the HSS, the 3GPP AAA transmits the EAP-REQ/AKA'-challenge message to the UE via the TWAN. The authentication-authorization vector is configured to indicate that the network supports single-connection and multi-connection modes.

In step 410, the UE transmits an EAP-RSP message to the TWAN.

Here, the EAP-RSP message carries the AKA'-challenge message, wherein mode=SCM/PDN connection parameters.

In step 411, the TWAN transmits the DER Diameter request message to the 3GPP AAA.

Here, the DER Diameter request message carries the EAP-RSP message/AKA'-challenge message.

In step 412, the 3GPP AAA obtains user subscription information from the HSS.

In step 413, the 3GPP AAA transmits a DER Diameter reply message to the TWAN.

Here, the DER Diameter reply message may carry the mode=SCM/MCM, a TWAN-S2a-Connectivity flag, subscription information, an EPC/NSWO, an Access Point Name (APN) and a PDN Type, etc.

In step 414, the TWAN creates a GPRS Tunneling Protocol (GTP)/Proxy Mobile IP (PMIP) session with the 3GPP AAA, and the PGW address information between the 3GPP AAA and the HSS is updated.

In step 415, the TWAN transmits the DER Diameter request message to the 3GPP AAA.

Here, the DER Diameter request message carries the mode=SCM/MCM, the TWAN-S2a-Connectivity flag, the subscription information, the EPC/NSWO, he APN and the PDN Type, etc.

In step 416, the 3GPP AAA transmits a Data Exchange Agreement (DEA) Diameter reply message to the TWAN.

Here, the DEA Diameter reply message carries an AKA'-Notification message.

In step 417, the TWAN transmits the EAP-REQ/AKA'-Notification message to the UE.

Here, in the embodiment and in the following embodiments, the symbol "/" has a meaning of including or carrying. For example, the EAP-REQ/AKA'-Notification message refers to that the EAP-REQ message includes the AKA'-Notification message, or the EAP-REQ message carries the AKA'-Notification message.

In step 418, the UE transmits an EAP-RSP/AKA'-Notification message to the TWAN.

In step 419, the TWAN transmits the DER Diameter request message/EAP-RSP message/AKA'-Notification message to the 3GPP AAA.

In step 420, the 3GPP AAA transmits a DEA Diameter reply message/EAP-Success message to the TWAN.

In step 421, the TWAN transmits the EAP-Success message to the UE.

In the embodiment of the disclosure, in the steps following step 410, the UE transmits the EAP REQ/AKA'-Challenge request message to the 3GPP AAA so as to request a single-connection mode and connect to the EPC. Meanwhile, the UE indicates the PDN connection parameters such as the APN. The 3GPP AAA transmits the PDN connection parameters transmitted by the UE to the TWAN via the DEA Diameter reply message, and the TWAN transmits the PDN connection parameters to the PDN GW by a create session request (GTP message) or a proxy binding update (PMIP message). The PDN GW updates an address to the 3GPP AAA. The PDN GW transmits a create session response or a proxy binding confirmation message to the TWAN. The create session response or the proxy binding confirmation message includes flow migration trigger mode indication determined by the network. The indication is transmitted from the TWAN to the 3GPP AAA via the DER Diameter request message. The 3GPP AAA transmits the indication information to the UE via the AKA'-notification message. The UE completes a subsequent authentication and authorization process, such that the authentication and authorization succeed.

FIG. 4-3 is a flow chart II illustrating an implementation process in a second embodiment of the disclosure. As shown in FIG. 4-3, the process includes the following steps.

In step 401 to step 408, a person skilled in the art can refer to related descriptions on step 401 to step 408 in FIG. 4-2, which will not be repeated herein for conciseness.

In step S409, a TWAN transmits a DER Diameter request message to a 3GPP AAA server.

Here, the DER Diameter request message is configured to indicate a reason that the UE is accessed incorrectly to the 3GPP AAA server: illegal equipment identifier.

In step S410, the 3GPP AAA server transmits a DEA Diameter reply message to the TWAN.

Here, the DEA Diameter reply message carries an EAP-REQ/AKA'-Notification message, and the EAP-REQ/AKA'-Notification message carries the reason for the incorrect access (illegal equipment identifier).

In step S411, the TWAN transmits the EAP-REQ/AKA'-Notification message to an UE.

Here, the EAP-REQ/AKA'-Notification message carries the reason for the incorrect access (illegal equipment identifier).

Here, in step S410 and step S411, the EAP-REQ/AKA'-Notification message that is transmitted by the 3GPP AAA to the UE via the TWAN and carries the reason for the incorrect access (illegal equipment identifier) is forwarded to the UE via the TWAN.

In step S412, the UE transmits an EAP-RSP/AKA'-Notification response message to the TWAN.

In step S413, the TWAN transmits the EAP-RSP/AKA'-Notification response message to the 3GPP AAA server.

Here, in step S412 and step S413, the UE transmits the EAP-RSP/AKA'-Notification response message to the 3GPP AAA server so as to reply step S411.

In step S414, the 3GPP AAA server transmits an EAP-Failure message to the TWAN.

In step S415, the TWAN transmits the EAP-Failure message to the UE.

Here, in step 414 and step 415, the 3GPP AAA server transmits the EAP-Failure message to the UE so as to indicate that the access authentication fails and the access is refused.

In the embodiment shown in FIG. 4-3, when the TWAN fails to be accessed, after the TWAN checks and finds that the equipment identifier is illegal, the 3GPP AAA is required to be notified. The 3GPP AAA notifies the UE of the reason for the incorrect access. The EAP is performed between the UE and the 3GPP AAA, and the EAP message is passed through the TWAN (referring to step S414 and step S415). Finally, the 3GPP AAA server transmits the EAP-Failure message.

### Embodiment Three

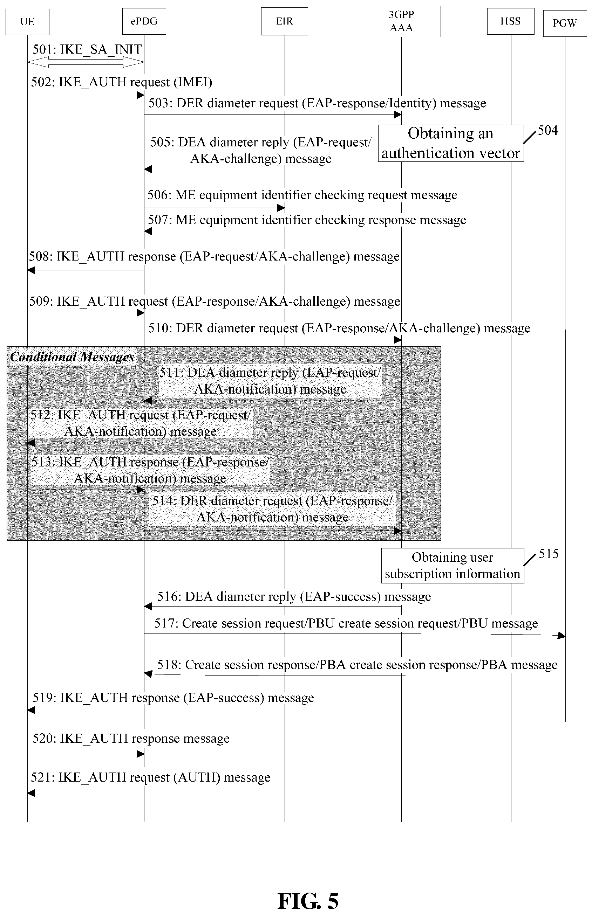

A UE is connected to an EPC from an untrusted WLAN access network. What is described by the embodiment here is that an ePDG transmits identifier information of the UE to an EIR, and the EIR checks the identifier information of the UE and feeds a check result back to the ePDG, thereby implementing the checking on an equipment identifier. FIG. 5 is a flow chart illustrating an implementation process in a third embodiment of the disclosure. As shown in FIG. 5, the process includes the following steps.

In step 501, the UE is interacted with the ePDG in terms of an Internet Key Exchange (IKE)_Security Association(SA)_INIT message.

Here, the UE and the ePDG negotiate an encryption algorithm, exchange key and the like by means of the IKE_SA_INIT message. The IKE_SA_INIT message includes an IKE_SA_INIT request message and an IKE_SA_INIT response message. The IKE_SA_INIT is an abbreviation of Internet Key Exchange-Security Association-INITial.

In step 502, the UE transmits an IKE_AUTH Request message to the ePDG. The IKE_AUTH Request message carries the identifier information of the UE, such as IMEI information.

In step 503, the ePDG transmits a DER Diameter request message/EAP-RSP message/Identity to a 3GPP AAA.

In step 504, the 3GPP AAA obtains an authentication-authorization vector from the HSS.

In step 505, the 3GPP AAA transmits a DEA Diameter reply message/EAP-REQ message/AKA-Challenge message to the ePDG.

Here, the DEA Diameter reply message carries the authentication-authorization vector.

Here, in step 502 to step 505, the UE starts an IKE_AUTH stage and transmits the identity, the IMEI and the APN to the network. The 3GPP AAA checks the identity and initiates authentication challenge information to the UE. The authentication challenge information is transmitted to the ePDG via the DEA Diameter reply message and is forwarded by the ePDG.

In step 506, the ePDG transmits an ME equipment identifier checking request message to the EIR.

Here, the ePDG transmits the identifier information of the UE to the EIR via the ME equipment identifier checking request message, such that the EIR checks the identifier information of the UE. The ME equipment identifier checking request message carries the identifier information of the UE. After receiving the identifier information of the UE, the EIR checks the IMEI information and/or the IMSI information to obtain the check result. The check result includes a check result that the identifier information of the UE is legal or a check result that the identifier information of the UE is illegal.

In step 507, the EIR transmits an ME equipment identifier checking response message to the ePDG.

Here, the ME equipment identifier checking response message carries a check result that the identifier information of the UE is legal and valid. After the ePDG receives the check result, the ePDG stores the check result and continues to perform the subsequent procedures.

In step 508, the ePDG transmits the IKE_AUTH Response message/EAP-REQ message /AKA-Challenge message to the UE.

In step 509, the UE transmits the IKE_AUTH Request message /EAP-RSP message/AKA-Challenge message to the ePDG.

In step 510, the ePDG transmits the DER Diameter request message/EAP-RSP message /AKA-Challenge message to the 3GPP AAA.

Here, in step 508 to step 510, the ePDG transmits authentication information such as an EAP challenge message of the 3GPP AAA, identifier information of the ePDG and a certificate to the UE via an IKEv2 message. The UE checks authentication parameters and replies the challenge message in the IKEv2 message. The ePDG forwards a challenge reply message of the UE to the 3GPP AAA.

In step 511, the 3GPP AAA transmits a DEA Diameter reply message/EAP-REQ message/AKA-Notification message to the ePDG.

In step 512, the ePDG transmits the IKE-AUTH Request message/EAP-REQ message/AKA-Notification message to the UE.

In step 513, the UE transmits the IKE-AUTH Response message/EAP-RSP message/AKA-Notification message to the ePDG.

In step 514, the ePDG transmits the DER Diameter request message/EAP-RSP message/AKA-Notification message to the 3GPP AAA.

In step 515, the 3GPP AAA obtains user subscription information from the HSS.

In step 516, the 3GPP AAA transmits the DEA Diameter reply message/EAP-Success message to the ePDG.

Here, in step 511 to step 516, if the 3GPP AAA performs dynamic IP mobile management selection, the 3GPP AAA initiates an AKA-notification interactive process to the UE. After all checks are successful, the 3GPP AAA obtains the user subscription information from the HSS and transmits an EAP-success message to the user.

In step 517, the ePDG transmits a Create Session Request message or a PBU to the PDN GW.

In step 518, the PDN GW transmits a Create Session Response message or a Proxy Binding Acknowledgement (PBA) message to the ePDG, thereby completing the creation of a GTP or PMIP tunnel.

In step 519, the ePDG transmits the IKE-AUTH Response message to the UE.

Here, the IKE-AUTH Response message is an IKE-Authentication response message.

In step 520, the UE transmits the IKE-AUTH Request message to the ePDG. In step 521, the ePDG transmits the IKE-AUTH Response message to the UE.

Here, in step 519 to step 521, the UE and the ePDG complete the subsequent IKE authorization procedures.

### Embodiment Four

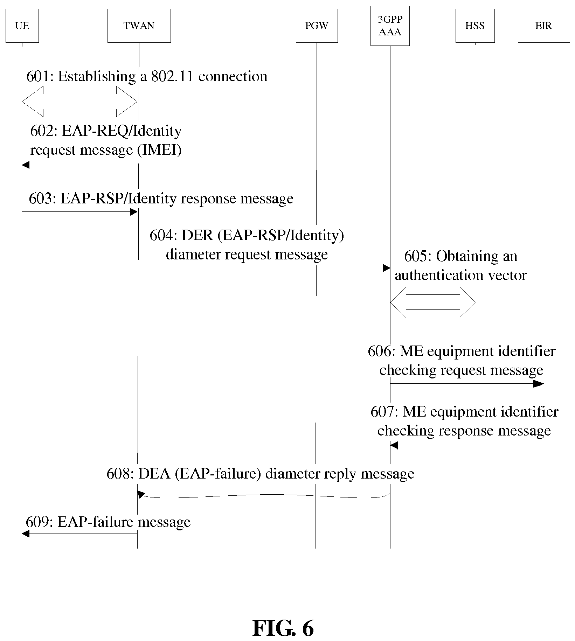

A UE is connected to an EPC from a TWAN. What is described in the embodiment is a process in which a 3GPP AAA server transmits identifier information of the UE to an EIR, the EIR checks the identifier information of the UE and obtains an illegal check result, then the EIR feeds the check result to the 3GPP AAA server, and then the 3GPP AAA server refuses the UE to access. FIG. 6 is a flow chart illustrating an implementation process in a fourth embodiment of the disclosure. As shown in FIG. 6, the process includes the following steps.

In step 601, the UE establish a connection based on an IEEE 802.11 with a TWAN.

In step 602, the TWAN transmits an EAP-REQ message/Identity to the UE.

Here, the EAP-REQ message is configured to implement identity authentication and interactive processing for access configuration information. In step 602, the EAP-REQ message carries the identity.

In step 603, the UE transmits an EAP-RSP message/Identity to the TWAN.

Here, the EAP-RSP message carries the identifier information of the UE. The EAP-RSP message corresponds to the EAP-REQ message. In step 602 and step 603, the TWAN is interacted with the UE in terms of an EAP Identity, thereby performing the identity authentication and the interactive processing for the access configuration information. The UE transmits the identifier information of the UE to the TWAN by means of the EAP RSP message.

In step 604, the TWAN transmits a DER Diameter request message/EAP-RSP message/Identity to a 3GPP AAA.

Here, the 3GPP AAA in the embodiment and in the following embodiments refers to a 3GPP AAA server.

In step 605, the 3GPP AAA obtains an authentication-authorization vector from an HSS.

In step 606, the 3GPP AAA transmits an ME equipment identifier checking request message to the EIR.

In step 607, the EIR transmits an ME equipment identifier checking response message to the 3GPP AAA.

In step 608, the 3GPP AAA transmits a DEA Diameter reply message to the TWAN.

Here, the DEA Diameter reply message includes a check result about EAP failure.

Here, in step 606 and step 607, the ME equipment identifier checking request message carries the identifier information of the UE. In this way, the 3GPP AAA transmits the identifier information of the UE to the EIR, and then the EIR performs equipment identifier information checking. Specifically, the EIR checks whether the identifier information of the UE is legal or valid, and transmits a check result to the 3GPP AAA by means of the ME equipment identifier checking response message. The 3GPP AAA stores the result and continues to perform the subsequent procedures. The check result includes that the identifier information of the UE is legal and valid or illegal and invalid. In the embodiment, it is assumed that the check result is that the equipment identifier of the UE is invalid and thus the 3GPP AAA replies a DEA (EAP-Failure) Diameter reply message including an error code to the TWAN.

In step 609, the TWAN transmits an EAP-Failure message to the UE. The authentication and the authorization for the access of the UE are failed.

### Embodiment Five

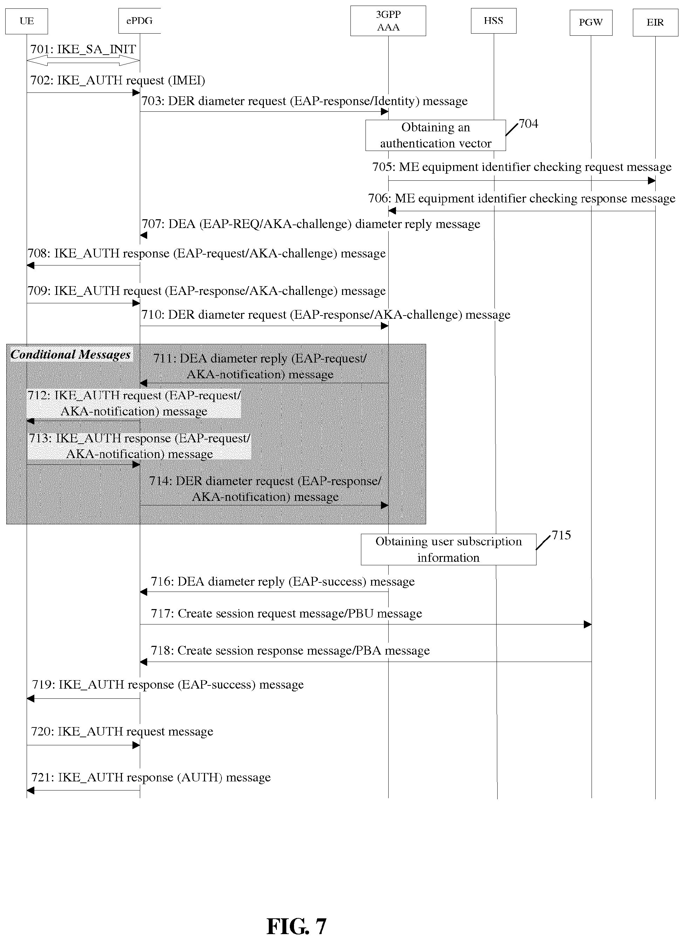

A UE is connected to an EPC from an untrusted WLAN access network. What is described by the embodiment here is that a 3GPP AAA server transmits identifier information of the UE to an EIR, the EIR checks the identifier information of the UE and then the EIR feeds a check result back to the 3GPP AAA server, thereby implementing the checking on an equipment identifier. FIG. 7 is a flow chart illustrating an implementation process in a fifth embodiment of the disclosure. As shown in FIG. 7, the process includes the following steps.

In step 701, the UE is interacted with the ePDG in terms of an IKE_SA_INIT message.

Here, the UE and the ePDG negotiate an encryption algorithm, exchange key and the like by means of the IKE_SA_INIT message. The IKE_SA_INIT message includes an IKE_SA_INIT request and an IKE_SA_INIT response message. The IKE_SA_INIT is an abbreviation of Internet Key Exchange-Security Association-INITial.

In step 702, the UE transmits an IKE_AUTH Request message to the ePDG, wherein the IKE_AUTH Request message carries the identifier information of the UE.

In step 703, the ePDG transmits a DER Diameter request message/EAP-RSP message/Identity to a 3GPP AAA.

In step 704, the 3GPP AAA obtains an authentication-authorization vector from the HSS.

Here, in step 702 to step 704, the UE starts an IKE_AUTH stage and transmits the identity, the IMEI and the APN of the UE to the network. The 3GPP AAA checks the identity and initiates authentication challenge information to the UE. The authentication challenge information is transmitted to the ePDG via the DEA Diameter reply message and is forwarded by the ePDG.

In step 705, the 3GPP AAA server transmits an ME equipment identifier checking request message to the EIR.

Here, the ME equipment identifier checking request message carries the identifier information of the UE. After receiving the identifier information of the UE, the EIR checks the identifier information of the UE to obtain the check result. The check result includes a check result that the identifier information of the UE is legal or a check result that the identifier information of the UE is illegal.

In step 706, the EIR transmits an ME equipment identifier checking response message to the 3GPP AAA.

Here, the ME equipment identifier checking response message carries a check result that the identifier information of the UE is legal and valid. After the 3GPP AAA receives the check result, the 3GPP AAA stores the check result and continues to perform the subsequent procedures.

In step 707, the 3GPP AAA transmits the DEA Diameter reply message/EAP-REQ message/AKA-Challenge message to the ePDG.

In step 708, the ePDG transmits the IKE_AUTH Response message/EAP-REQ message /AKA-Challenge message to the UE.

In step 709, the UE transmits the IKE_AUTH Request message/EAP-RSP message/AKA-Challenge message to the ePDG.

In step 710, the ePDG transmits the DER Diameter request message/EAP-RSP message /AKA-Challenge message to the 3GPP AAA.

Here, in step 707 to step 710, the ePDG transmits authentication information such as an EAP challenge message of the 3GPP AAA, identifier information of the ePDG and a certificate to the UE via an IKEv2 message. The UE checks authentication parameters and replies the challenge message in the IKEv2 message. The ePDG forwards a challenge reply message of the UE to the 3GPP AAA.

In step 711, the 3GPP AAA transmits the EAP-REQ message/AKA-Notification message to the ePDG.

In step 712, the ePDG transmits the IKE-AUTH Request message or EAP-REQ message/AKA-Notification message to the UE.

In step 713, the UE transmits the IKE-AUTH Response message or EAP-RSP message/AKA-Notification message to the ePDG.

In step 714, the ePDG transmits the DER Diameter request message/EAP-RSP message/AKA-Notification message to the 3GPP AAA.

In step 715, the 3GPP AAA obtains user subscription information from the HSS.

In step 716, the 3GPP AAA transmits the DEA Diameter reply message/EAP-Success message to the ePDG.

Here, in step 711 to step 716, if the 3GPP AAA performs dynamic IP mobile management selection, the 3GPP AAA initiates an AKA-notification interactive process to the UE. After all checks are successful, the 3GPP AAA obtains the user subscription information from the HSS and transmits an EAP-success message to the user.

In step 717, the ePDG transmits a create session request message or a PBU message to the PDN GW.

Here, the create session request message is a Create Session Request message.

In step 718, the PDN GW transmits a create session response message or a PBA message to the ePDG, thereby completing the creation of a GTP or PMIP tunnel.

In step 719, the ePDG transmits the IKE-AUTH Response message to the UE.

Here, the IKE-AUTH Response message is an IKE-Authentication response message.

In step 720, the UE transmits the IKE-AUTH Request message to the ePDG. In step 721, the ePDG transmits the IKE-AUTH Response message to the UE.

Here, in step 719 to step 721, the UE and the ePDG complete the subsequent IKE authorization procedures.

### Embodiment Six

Based on the above method embodiments, the embodiment of the disclosure provides a TWAN. A first transmission unit, a first receiving unit and a first processing unit in the TWAN all may be implemented by a processor in the TWAN, and of course, also may be implemented by a specific logic circuit. In the specific embodiments, the processor may be a Central Processing Unit (CPU), a Microprocessor Unit (MPU), a Digital Signal Processor (DSP) or a Field Programmable Gate Array (FPGA), etc.

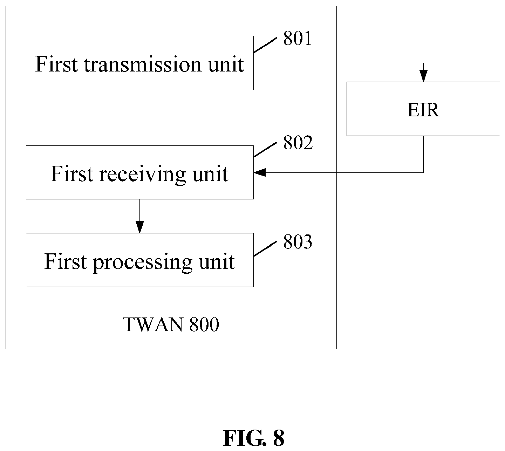

FIG. 8 is a structural schematic diagram of a TWAN in a sixth embodiment of the disclosure. As shown in FIG. 8, the TWAN 800 includes a first transmission unit 801, a first receiving unit 802 and a first processing unit 803.

The first transmission unit 801 is configured to transmit, when a WLAN access network is a TWAN, the identifier information of an UE to an EIR. The identifier information of the UE is configured to enable the EIR to check the identifier information of the UE.

The first receiving unit 802 is configured to receive a check result transmitted by the EIR.

The first processing unit 803 is configured to perform an EPC access procedure on the UE according to the check result.

In the embodiment of the disclosure, the TWAN further includes a fourth transmission unit and a fourth receiving unit.

The fourth transmission unit is to enable, when the UE establishes a connection based on an IEEE 802.11 with the TWAN, the TWAN to transmit an EAP-REQ message to the UE. The EAP-REQ message is configured to request the identifier information of the UE from the UE.

The fourth receiving unit is configured to receive an EAP-RSP message transmitted by the UE. The EAP-RSP message carries the identifier information of the UE.

In the embodiment of the disclosure, the first transmission unit is configured to transmit an ME equipment identifier checking request message to the EIR. The ME equipment identifier checking request message carries the identifier information of the UE. The ME equipment identifier checking request message is configured to request the EIR to check whether the identifier information of the UE is legal.

The first receiving unit is configured to receive an ME equipment identifier checking response message transmitted by the EIR. The ME equipment identifier checking response message carries a check result, and the check result includes a result that the identifier information of the UE is legal or a result that the identifier information of the UE is illegal.

In the embodiment of the disclosure, the first processing unit is to perform, when the check result indicates that the identifier information of the UE is legal, a process of accessing the UE to the EPC to establish a connection.

When the check result indicates that the identifier information of the UE is illegal, the first processing unit transmits an EAP-failure message to the UE. The EAP-failure message is configured to indicate that the UE is refused to be accessed to the EPC and the process is ended.

Based on the above TWAN, the embodiment of the disclosure further provides a system for checking an equipment identifier. The system includes a TWAN and an EIR.

The TWAN is configured to transmit, when a WLAN access network is the TWAN, the identifier information of an UE to the EIR. The identifier information of the UE is configured to enable the EIR to check the identifier information of the UE; to receive a check result transmitted by the EIR; and to perform an EPC access procedure on the UE according to the check result.

The EIR is configured to check the legality on the identifier information of the UE and transmit the check result to a 3GPP AAA server.

Here, it is noted that, the description on the above embodiments about the TWAN is similar to that on the method embodiments. Thus, the beneficial effects similar to the method embodiments are achieved, which are not repeated here. For any technical details undisclosed in the embodiments of the TWAN, it can be understood by referring to the description on the method embodiments of the disclosure and will not be repeated here for conciseness.

### Embodiment Seven

Based on the above method embodiments, the embodiment of the disclosure provides an ePDG. A second transmission unit, a second receiving unit and a second processing unit in the ePDG all may be implemented by a processor in the TWAN, and of course, also may be implemented by a specific logic circuit. In the specific embodiments, the processor may be a CPU, a MPU, a DSP or a FPGA, etc.

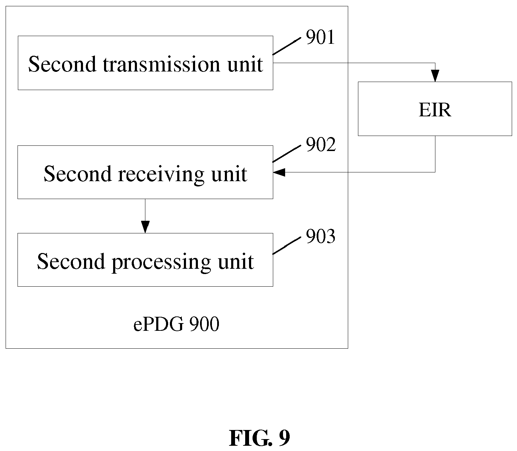

FIG. 9 is a structural schematic diagram of an ePDG in a seventh embodiment of the disclosure. As shown in FIG. 9, the ePDG 900 includes a second transmission unit 901, a second receiving unit 902 and a second processing unit 903.

When a WLAN access network is an untrusted WLAN access network, the second transmission unit 901 is configured to transmit identifier information of an UE to an EIR. The identifier information of the UE is configured to enable the EIR to check the identifier information of the UE.

The second receiving unit 902 is configured to receive a check result transmitted by the EIR.

The second processing unit 903 is configured to perform an EPC access procedure on the UE according to the check result.

In the embodiment of the disclosure, the ePDG further includes a fifth receiving unit, configured to receive an IKE_AUTH Request message transmitted by the UE. The IKE_AUTH Request message carries the identifier information of the UE.

In the embodiment of the disclosure, the second transmission unit is configured to transmit an ME equipment identifier checking request message to the EIR. The ME equipment identifier checking request message carries the identifier information of the UE, and the ME equipment identifier checking request message is configured to request the EIR to check whether the identifier information of the UE is legal.

The second receiving unit is configured to receive an ME equipment identifier checking response message transmitted by the EIR. The ME equipment identifier checking response message carries a check result, and the check result includes a result that the identifier information of the UE is legal or a result that the identifier information of the UE is illegal.

In the embodiment of the disclosure, the second processing unit is configured to perform, when the check result indicates that the identifier information of the UE is legal, the EPC access procedure on the UE to establish a connection.

When the check result indicates that the identifier information of the UE is illegal, the second processing unit transmits an IKE-AUTH Response message to the UE. The IKE-AUTH Response message carries an EAP-failure message and the EAP-failure message is configured to indicate that the UE is refused to be accessed to the EPC and the process is ended.

Based on the above ePDG, the embodiment of the disclosure further provides a system for checking an equipment identifier. The system includes an ePDG and an EIR.

The ePDG is configured to transmit, when a WLAN access network is an untrusted WLAN access network, the identifier information of an UE to the EIR. The identifier information of the UE is configured to enable the EIR to check the identifier information of the UE; to receive a check result transmitted by the EIR; and to perform an EPC access procedure on the UE according to the check result.

The EIR is configured to check the legality on the identifier information of the UE and transmit the check result to a 3GPP AAA server.

Here, it is noted that, the description on the embodiment of the ePDG is similar to that on the method embodiments, such that the beneficial effects similar to the method embodiments are achieved, which are not repeated herein. For any technical details undisclosed in the embodiment of the ePDG, it can be understood by referring to the description on the method embodiments of the disclosure and will not be repeated here for conciseness.

### Embodiment Eight

Based on the above method embodiments, the embodiment of the disclosure provides a 3GPP AAA server. A third transmission unit, a third receiving unit and a third processing unit in the 3GPP AAA server all may be implemented by a processor in the 3GPP AAA server, and of course, also may be implemented by a specific logic circuit. In the specific embodiments, the processor may be a CPU, an MCU, a DSP or a FPGA, etc.

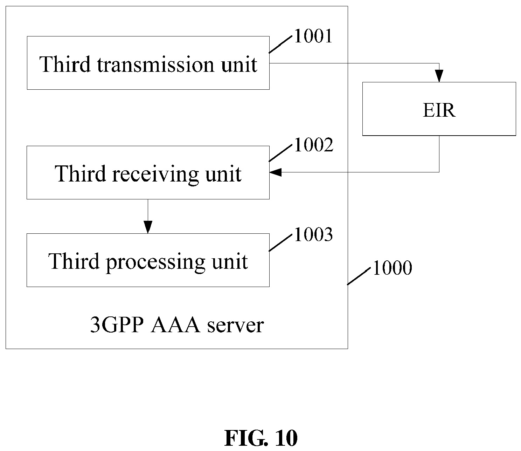

FIG. 10 is a structural schematic diagram of a 3GPP AAA server in an eighth embodiment of the disclosure. As shown in FIG. 10, the 3GPP AAA server 1000 includes a third transmission unit 1001, a third receiving unit 1002 and a third processing unit 1003.

The third transmission unit 1001 is configured to transmit, when an UE is connected to an EPC from a TWAN or an untrusted WLAN access network, the identifier information of the UE to an EIR. The identifier information of the UE is configured to enable the EIR to check the identifier information of the UE.

The third receiving unit 1002 is configured to receive a check result transmitted by the EIR.

The third processing unit 1003 is configured to perform an EPC access procedure on the UE according to the check result.

In the embodiment of the disclosure, the 3GPP AAA server further includes a sixth receiving unit, configured to receive, when the UE is connected to the EPC from the TWAN, a DER Diameter request message transmitted by the TWAN. The DER Diameter request message carries the identifier information of the UE.

When the UE is connected to the EPC from the untrusted WLAN access network, the sixth receiving unit is configured to receive a DER Diameter request message transmitted by the ePDG. The DER Diameter request message carries the identifier information of the UE.

In the embodiment of the disclosure, the third transmission unit is configured to transmit an ME equipment identifier checking request message to the EIR. The ME equipment identifier checking request message carries the identifier information of the UE, and the ME equipment identifier checking request message is configured to request the EIR to check whether the identifier information of the UE is legal.

The third receiving unit is configured to receive an ME equipment identifier checking response message transmitted by the EIR. The ME equipment identifier checking response message carries a check result, and the check result includes a result that the identifier information of the UE is legal or a result that the identifier information of the UE is illegal.

In the embodiment of the disclosure, the third processing unit is configured to perform, when the check result indicates that the identifier information of the UE is legal, the EPC access procedure on the UE to establish a connection. Specifically, it transmits a DEA Diameter reply message to the ePDG or the TWAN. The DEA Diameter reply message carries an EAP-success message, and the EAP-success message is configured to indicate that the UE successfully accesses to the EPC.

When the check result indicates that the identifier information of the UE is illegal, the third processing unit transmits the DEA Diameter reply message to the ePDG or the TWAN. The DEA Diameter reply message carries an EAP-failure message, and the EAP-failure message is configured to indicate that the UE is refused to access to the EPC and the process is ended.

Based on the above 3GPP AAA server, the embodiments of the disclosure further provide a system for checking an equipment identifier. The system includes a 3GPP AAA server and an EIR.

The 3GPP AAA server is configured to transmit, when an UE is connected to an EPC from a TWAN or an untrusted WLAN access network, the identifier information of an UE to an EIR, wherein the identifier information of the UE is configured to enable the EIR to check the identifier information of the UE; to receive a check result transmitted by the EIR; and to perform an EPC access procedure on the UE according to the check result.

The EIR is configured to check the legality on the identifier information of the UE and transmit the check result to the 3GPP AAA server.

Here, it is noted that, the description on the embodiment of the 3GPP AAA server is similar to that on the method embodiments, such that the beneficial effects similar to the method embodiments are achieved, which are not repeated herein. For any technical details undisclosed in the embodiment of the3GPP AAA server, it can be understood by referring to the description on the method embodiments of the disclosure and will not be repeated herein for conciseness.

It is noted that, in the embodiments of the disclosure, if being implemented in form of a software function module and sold or used as an independent product, the method for checking the equipment identifier also may be stored in a computer-readable storage medium. Based on such an understanding, the technical solutions of the embodiments of the disclosure substantially or a part thereof with contributions to the related art may be embodied in form of software product. The computer software product is stored in a storage medium, including a plurality of instructions arranged to enable a computer (which may be a personal computer, a server, a network device or the like) to execute all or part of the method in each of the embodiments of the disclosure. The preceding storage medium includes various media capable of storing program codes such as a U disk, a mobile storage device, a Read Only Memory (ROM), a magnetic disk or a compact disc. In this way, the embodiments of the disclosure are not limited to any special combination of hardware and software.

Correspondingly, the embodiments of the disclosure further provide a computer storage medium having computer executable instructions stored therein, which are configured to implement the method for checking the equipment identifier provided by each of the embodiments of the disclosure.

The expression "one embodiment" or "an embodiment" referred throughout this specification means that a particular feature, structure, or characteristic described in connection with a certain embodiment is included in at least one embodiment of the disclosure. Thus, the phrase "in one embodiment" or "an embodiment" in various places throughout this specification is not necessarily to refer to the same embodiment. Furthermore, the particular features, structures, or characteristics may be combined in one or more embodiments. It should be understood that, in the embodiments of the disclosure, the size of a serial number of the steps of each process does not mean a sequential order to execute. The execution order of each process should be determined in terms of its function and internal logic, and should not be intended to limit an implementation process of the embodiments of the disclosure.

In the several embodiments provided in the disclosure, it should be understood that the equipment and methods disclosed can be implemented in other ways. The equipment embodiments described above are merely exemplary. For example, the classification of the elements is merely division of logic functions. In practice, there are other classification ways. For example, some of the elements or components may be combined or integrated into another system, or some features may be omitted or unexecuted. Moreover, coupling or direct coupling or communication connection between the components illustrated or discussed herein may be indirect coupling or communication connection among equipment or elements by some interfaces or may be electric connection, mechanical connection or the other forms of connection.

The elements described as separate components may be or may be not physically separated, and the components illustrated as elements may be or may be not physical elements, i.e., they may be located at one place or distributed in a plurality of network elements. Moreover, some of or all the elements may be selected according to actual demands to implement the purpose of the embodiments of the disclosure.

In addition, the functional elements involved in the embodiments of the disclosure may be all integrated into a processing element or each of the elements may be act as a unit separately, or two or more than two of these elements may be integrated into one unit. The integrated element described above may be implemented in the form of hardware or may be implemented in the form of hardware plus software function elements.

It should be understood by those of ordinary skill in the art that all or some of the steps of the foregoing method embodiments can be implemented by program instructions related hardware. The program described above may be stored in a computer-readable storage medium. The program, when executed, executes steps of the method embodiments described above. The storage medium described above includes a mobile storage device, an ROM, a magnetic disk or a compact disc or another medium capable of storing program codes.

Alternatively, if being implemented in form of a software function module and sold or used as an independent product, the integrated elements of the disclosure may be stored in a computer-readable storage medium. Based on such an understanding, the technical solutions of the embodiments of the disclosure substantially or a part thereof with contributions to the conventional art may be embodied in form of software product, and the computer software product is stored in a storage medium, including a plurality of instructions arranged to enable a computer (which may be a personal computer, a server, a network device or the like) to execute all or part of the method in each embodiment of the disclosure. The preceding storage medium includes various media capable of storing program codes such as a mobile storage device, an ROM, a magnetic disk or a compact disc.

The above description is only specific embodiments of the disclosure and the protection scope of the disclosure is not limited to this. It may be readily conceivable for those skilled in the art to have changes and modifications in the technical scope of the disclosure, and all should be included in protection scope of the disclosure. Therefore, the protection scope of the disclosure should be in accordance with the protection scope of the appended claims.

### INDUSTRIAL APPLICABILITY

In the embodiments of the disclosure, when the WLAN access network is the TWAN, the TWAN transmits the identifier information of the UE to the EIR. The identifier information of the UE is configured to enable the EIR to check the identifier information of the UE. The TWAN receives the check result transmitted by the EIR and performs the EPC access procedure on the UE according to the check result. As such, the checking on the identifier information of the UE is implemented in the WLAN access scenario.

## Claims

1. A method for checking an equipment identifier, comprising:
when a Wireless Local Area Network (WLAN) access network is a Trusted WLAN Access Network (TWAN), transmitting, by the TWAN, identifier information of a User Equipment (UE) to an Equipment Identity Register (EIR), wherein the identifier information of the UE is configured to enable the EIR to check the identifier information of the UE;
receiving, by the TWAN, a check result transmitted by the EIR; and
performing, by the TWAN, an Evolved Packet Core Network (EPC) access procedure on the UE according to the check result.

2. The method according to claim 1, wherein before transmitting, by the TWAN, the identifier information of the UE to the EIR, the method further comprises:
when the UE establishes a connection based on an Institute of Electrical and Electronic Engineers (IEEE) 802.11 with the TWAN, transmitting, by the TWAN, an Extensible Authentication Protocol (EAP)-REQ message to the UE, wherein the EAP-REQ message is configured to request the identifier information of the UE from the UE; and
receiving, by the TWAN, an EAP-RSP message transmitted by the UE, wherein the EAP-RSP message carries the identifier information of the UE.

3. The method according to claim 1, wherein transmitting, by the TWAN, the identifier information of the UE to the EIR comprises: transmitting, by the TWAN, an Mobile Equipment (ME) identifier checking request message to the EIR, wherein the ME equipment identifier checking request message carries the identifier information of the UE and is configured to request the EIR to check whether the identifier information of the UE is legal; and
wherein receiving, by the TWAN, the check result transmitted by the EIR comprises: receiving, by the TWAN, an ME equipment identifier checking response message transmitted by the EIR, wherein the ME equipment identifier checking response message carries the check result, and the check result comprises a result indicating that the identifier information of the UE is legal or a result indicating that the identifier information of the UE is illegal.

4. The method according to claim 3, wherein performing, by the TWAN, the EPC access procedure on the UE according to the check result comprises:
when the check result indicates that the identifier information of the UE is legal, performing, by the TWAN, a process of accessing to the EPC to establish a connection on the UE; and
when the check result indicates that the identifier information of the UE is illegal, transmitting, by the TWAN, a Distinguished Encoding Rules (DER) Diameter request message to a 3rd Generation Partnership Project (3GPP) Authentication, Authorization and Accounting (AAA) server, wherein the DER Diameter request message is configured to indicate a reason for incorrect access of the UE to the 3GPP AAA server: an illegal equipment identifier.

5. The method according to any one of claims 1 to 4, wherein the identifier information of the UE comprises an International Mobile Equipment Identity (IMEI) of the UE; or
the identifier information of the UE comprises the IMEI and an International Mobile Subscriber Identity (IMSI) of the UE.

6. A method for checking an equipment identifier, comprising:
when a Wireless Local Area Network (WLAN) access network is an untrusted WLAN access network, transmitting, by an Evolved Packet Data Gateway (ePDG), identifier information of a User Equipment (UE) to an Equipment Identity Register (EIR), wherein the identifier information of the UE is configured to enable the EIR to check the identifier information of the UE;
receiving, by the ePDG, a check result transmitted by the EIR; and
performing, by the ePDG, an Evolved Packet Core Network (EPC) access procedure on the UE according to the check result.

7. The method according to claim 6, wherein before transmitting, by the ePDG, the identifier information of the UE to the EIR, the method further comprises:
receiving, by the ePDG, an Internet Key Exchange(IKE)_AUTH Request message transmitted by the UE, wherein the IKE_AUTH Request message carries the identifier information of the UE.

8. The method according to claim 6 or 7, wherein transmitting, by the ePDG, the identifier information of the UE to the EIR comprises: transmitting, by the ePDG, an Mobile Equipment (ME) identifier checking request message to the EIR, wherein the ME equipment identifier checking request message carries the identifier information of the UE and is configured to request the EIR to check whether the identifier information of the UE is legal; and
wherein receiving, by the ePDG, the check result transmitted by the EIR comprises: receiving, by the ePDG, an ME equipment identifier checking response message transmitted by the EIR, wherein the ME equipment identifier checking response message carries the check result, and the check result comprises a result indicating that the identifier information of the UE is legal or a result indicating that the identifier information of the UE is illegal.

9. The method according to claim 8, wherein performing, by the ePDG, the EPC access procedure on the UE according to the check result comprises:
when the check result indicates that the identifier information of the UE is legal, performing, by the ePDG, a process of accessing to the EPC to establish a connection on the UE; and
when the check result indicates that the identifier information of the UE is illegal, transmitting, by the ePDG, an IKE_AUTH Response message to the UE, wherein the IKE_AUTH Response message carries an Extensible Authentication Protocol (EAP)-failure message and the EAP-failure message is configured to indicate that the UE is refused to be accessed and the process is ended.

10. The method according to any one of claims 6 to 9, wherein the identifier information of the UE comprises an International Mobile Equipment Identity (IMEI) of the UE; or,
the identifier information of the UE comprises the IMEI and an International Mobile Subscriber Identity (IMSI) of the UE.

11. A method for checking an equipment identifier, comprising:
when a User Equipment (UE) is connected to an Evolved Packet Core Network (EPC) from a Trusted Wireless Local Area Network (WLAN) Access Network (TWAN) or an untrusted WLAN access network, transmitting, by a 3rd Generation Partnership Project (3GPP) Authentication, Authorization and Accounting (AAA) server, identifier information of the UE to an Equipment Identity Register (EIR), wherein the identifier information of the UE is configured to enable the EIR to check the identifier information of the UE;
receiving, by the 3GPP AAA server, a check result transmitted by the EIR; and
performing, by the 3GPP AAA server, an EPC access procedure on the UE according to the check result.

12. The method according to claim 11, wherein before transmitting, by the3GPP AAA server, the identifier information of the UE to the EIR, the method further comprises:
when the UE is connected to the EPC from the TWAN, receiving, by the 3GPP AAA server, a Distinguished Encoding Rules (DER) Diameter request message transmitted by the TWAN, wherein the DER Diameter request message carries the identifier information of the UE; and
when the UE is connected to the EPC from the untrusted WLAN access network, receiving, by the 3GPP AAA server, a DER Diameter request message transmitted by an Evolved Packet Data Gateway (ePDG), wherein the DER Diameter request message carries the identifier information of the UE.

13. The method according to claim 11, wherein transmitting, by the 3GPP AAA server, the identifier information of the UE to the EIR comprises: transmitting, by the 3GPP AAA server, an Mobile Equipment (ME) identifier checking request message to the EIR, wherein the ME equipment identifier checking request message carries the identifier information of the UE and is configured to request the EIR to check whether the identifier information of the UE is legal; and
wherein receiving, by the 3GPP AAA server, the check result transmitted by the EIR comprises: receiving, by the TWAN, an ME equipment identifier checking response message transmitted by the EIR, wherein the ME equipment identifier checking response message carries the check result, and the check result comprises a result indicating that the identifier information of the UE is legal or a result indicating that the identifier information of the UE is illegal.

14. The method according to claim 11, wherein performing, by the 3GPP AAA server, the EPC access procedure on the UE according to the check result comprises:
when the check result indicates that the identifier information of the UE is legal, performing, by the 3GPP AAA server, a process of accessing the UE to the EPC to establish a connection; and
when the check result indicates that the identifier information of the UE is illegal, transmitting, by the 3GPP AAA server, a Data Exchange Agreement (DEA) Diameter reply message to the ePDG or the TWAN, wherein the DEA Diameter reply message carries an Extensible Authentication Protocol (EAP)-failure message, and the EAP-failure message is configured to indicate that the UE is refused to be accessed and the process is ended.

15. The method according to any one of claims 11 to 14, wherein the identifier information of the UE comprises an International Mobile Equipment Identity (IMEI) of the UE; or,
the identifier information of the UE comprises the IMEI and an International Mobile Subscriber Identity (IMSI) of the UE.

16. A Trusted Wireless Local Area Network (WLAN) Access Network (TWAN), comprising a first transmission unit, a first receiving unit and a first processing unit, wherein
the first transmission unit is configured to transmit, when a WLAN access network is the TWAN, identifier information of a User Equipment (UE) to an Equipment Identity Register (EIR), wherein the identifier information of the UE is configured to enable the EIR to check the identifier information of the UE;
the first receiving unit is configured to receive a check result transmitted by the EIR; and
the first processing unit is configured to perform an Evolved Packet Core Network (EPC) access procedure on the UE according to the check result.

17. The TWAN according to claim 16, wherein the TWAN further comprises a fourth transmission unit and a fourth receiving unit, wherein
the fourth transmission unit is configured to enable, when the UE establishes a connection based on an Institute of Electrical and Electronic Engineers (IEEE) 802.11 with the TWAN, the TWAN to transmit an Extensible Authentication Protocol(EAP)-REQ message to the UE, wherein the EAP-REQ message is configured to request the identifier information of the UE from the UE; and
the fourth receiving unit is configured to receive an EAP-RSP message transmitted by the UE, wherein the EAP-RSP message carries the identifier information of the UE.

18. An Evolved Packet Data Gateway (ePDG), comprising a second transmission unit, a second receiving unit and a second processing unit, wherein
when a Wireless Local Area Network (WLAN) access network is an untrusted WLAN access network, the second transmission unit is configured to transmit identifier information of a User Equipment (UE) to an Equipment Identity Register (EIR), wherein the identifier information of the UE is configured to enable the EIR to check the identifier information of the UE;
the second receiving unit is configured to receive a check result transmitted by the EIR; and
the second processing unit is configured to perform an Evolved Packet Core Network (EPC) access procedure on the UE according to the check result.

19. The ePDG according to claim 18, wherein the ePDG further comprises a fifth receiving unit, configured to receive an Internet Key Exchange (IKE)_AUTH Request message transmitted by the UE, wherein the IKE_AUTH Request message carries the identifier information of the UE.

20. A 3rd Generation Partnership Project (3GPP) Authentication, Authorization and Accounting (AAA) server, comprising a third transmission unit, a third receiving unit and a third processing unit, wherein
the third transmission unit is configured to transmit, when a User Equipment (UE) is connected to an Evolved Packet Core Network (EPC) from a Trusted Wireless Local Area Network (WLAN) Access Network (TWAN) or an untrusted WLAN access network, identifier information of the UE to an Equipment Identity Register (EIR), wherein the identifier information of the UE is configured to enable the EIR to check the identifier information of the UE;
the third receiving unit is configured to receive a check result transmitted by the EIR; and
the third processing unit is configured to perform an Evolved Packet Core Network (EPC) access procedure on the UE according to the check result.

21. The 3GPP AAA server according to claim 19, wherein the 3GPP AAA server further comprises a sixth receiving unit, configured to receive, when the UE is connected to the EPC from the TWAN, a Distinguished Encoding Rules (DER) Diameter request message transmitted by the TWAN, wherein the DER Diameter request message carries the identifier information of the UE;
when the UE is connected to the EPC from the untrusted WLAN access network, to receive a DER Diameter request message transmitted by an Evolved Packet Data Gateway (ePDG), wherein the DER Diameter request message carries the identifier information of the UE.

22. A system for checking an equipment identifier, comprising:
a Trusted Wireless Local Area Network (WLAN) Access Network (TWAN), configured to transmit, when a WLAN access network is the TWAN, identifier information of a User Equipment (UE) to an Equipment Identity Register (EIR), wherein the identifier information of the UE is configured to enable the EIR to check the identifier information of the UE; to receive a check result transmitted by the EIR; and to perform an Evolved Packet Core Network (EPC) access procedure on the UE according to the check result; and
the EIR, configured to check legality on the identifier information of the UE and transmit a check result to a 3rd Generation Partnership Project (3GPP)Authentication, Authorization and Accounting (AAA) server.

23. A system for checking an equipment identifier, comprising:
an Evolved Packet Data Gateway (ePDG), configured to transmit, when a Wireless Local Area Network (WLAN) access network is an untrusted WLAN access network, identifier information of a User Equipment (UE) to an Equipment Identity Register (EIR), wherein the identifier information of the UE is configured to enable the EIR to check the identifier information of the UE; to receive a check result transmitted by the EIR; and to perform an Evolved Packet Core Network (EPC) access procedure on the UE according to the check result; and
the EIR, configured to check legality on the identifier information of the UE and transmit a check result to a 3rd Generation Partnership Project (3GPP) Authentication, Authorization and Accounting (AAA) server.

24. A system for checking an equipment identifier, comprising:
a 3rd Generation Partnership Project (3GPP) Authentication, Authorization and Accounting (AAA) server, configured to transmit, when a User Equipment (UE) is connected to an Evolved Packet Core Network (EPC) from a Trusted Wireless Local Area Network (WLAN) Access Network (TWAN) or an untrusted WLAN access network, identifier information of the UE to an Equipment Identity Register (EIR), wherein the identifier information of the UE is configured to enable the EIR to check the identifier information of the UE; to receive a check result transmitted by the EIR; and to perform an EPC access procedure on the UE according to the check result; and
the EIR, configured to check legality on the identifier information of the UE and transmit a check result to the 3GPP AAA server.

25. A computer storage medium having computer executable instructions stored therein, wherein the computer executable instructions are configured to implement the method for checking the equipment identifier according to any one of claims 1 to 5.

26. A computer storage medium having computer executable instructions stored therein, wherein the computer executable instructions are configured to implement the method for checking the equipment identifier according to any one of claims 6 to 10.

27. A computer storage medium having computer executable instructions stored therein, wherein the computer executable instructions are configured to implement the method for checking the equipment identifier according to any one of claims 11 to 15.
